# EUROPEAN PATENT APPLICATION

(11) **EP 3 174 264 A1**
(43) Date of publication of application: **31.05.2017**
(21) Application number: 16160161.2
(22) Date of filing: 14.03.2016
(51) Int. Cl.: H04L 29/06

(54) **APPARATUS AND METHOD FOR AUTOMATICALLY GENERATING DETECTION RULE**

(30) Priority: 24.11.2015 KR 20150164488
(71) Applicant: Electronics and Telecommunications Research Institute, Daejeon 34129 (KR)
(72) Inventor: KIM, Sung-Ho, Daejeon 34186 (KR); LEE, Sung-Il, Daejeon 34186 (KR); LEE, Su-Chul, Daejeon 34186 (KR); YOON, Han-Jun, Daejeon 34186 (KR); LEE, Do-Hoon, Daejeon 34186 (KR)
(74) Representative: Betten & Resch

(57) **Abstract**

Disclosed herein are an apparatus and method for automatically generating a detection rule. The apparatus automatically generating a detection rule includes an analysis unit for analyzing network traffic of an input malicious traffic file, a malicious signature extraction unit for extracting a malicious signature from the malicious traffic file, and a detection rule generation unit for generating a detection rule using both the extracted malicious signature and information about packets of the malicious traffic file.

## Description

### BACKGROUND OF THE INVENTION

### 1. Technical Field

The present invention generally relates to technology for automatically generating network traffic detection rules used in a network security system and, more particularly, to technology for generating and managing pattern matching detection rules, which are required in order to automatically detect network traffic based on a signature extracted from malicious traffic.

### 2. Description of the Related Art

Companies that provide various types of services over the Internet have introduced and operated various types of network security equipment so as to protect service networks from internally and externally originating malicious traffic. Network security equipment such as intrusion detection systems, intrusion prevention systems, and integrated security equipment chiefly uses signature-based pattern matching detection rules to determine whether traffic is malicious.

Network traffic detection rules may be generated only when there is professional knowledge about networks, security, and an operating system (OS). Further, the generation of network traffic detection rules depends directly on the performance and reliability of network security equipment, and thus it is very important to generate network traffic detection rules.

When incorrect network traffic detection rules are generated, network security equipment must perform unnecessary operations, and thus the performance of the network security equipment is deteriorated.

Further, incorrect network traffic detection rules entail a high risk of generating false positive rates, thus decreasing the reliability of network security equipment and potentially incapacitating the network in which network security equipment is installed.

Therefore, the generation of network traffic detection rules is very important to network security. Further, at the present time, detection rules are generated such that a security expert or a network expert personally collects and analyzes malicious traffic and individually generates and verifies detection rules. However, there are limitations in that there are very few experts who can generate detection rules and in that it takes a lot of time to generate detection rules.

Therefore, there is an urgent need to develop technology for generating network traffic detection rules, which allow even semi-skilled workers to rapidly generate the detection rules.

### [Prior Art Documents]

### [Patent Documents]

(Patent Document 1) Korean Patent No. 10-1564518 (Date of Publication: October 29, 2015, entitled "Method and Apparatus for Automatically Generating Rule for Network Traffic Detection")

### SUMMARY OF THE INVENTION

An object of the present invention is to allow even semi-skilled workers to promptly and easily generate network traffic detection rules, thus enabling prompt responses to network threats, which are rapidly becoming more numerous.

Another object of the present invention is to reduce the time and expense required to generate network traffic detection rules.

In accordance with an aspect of the present invention to accomplish the above objects, there is provided an apparatus for automatically generating a detection rule, including an analysis unit for analyzing network traffic of an input malicious traffic file, a malicious signature extraction unit for extracting a malicious signature from the malicious traffic file, and a detection rule generation unit for generating a detection rule using both the extracted malicious signature and information about packets of the malicious traffic file.

The malicious signature extraction unit may extract the malicious signature by applying a latent Dirichlet allocation algorithm to flows of the malicious traffic file.

The malicious signature extraction unit may extract a character substring from payloads of flows corresponding to pre-stored normal traffic and the malicious traffic file, measures frequency of detection of the extracted character substring, groups words included in the malicious traffic file using parameter set values of the latent Dirichlet allocation algorithm, analyzes grouping results, and then extracts the malicious signature.

The malicious signature extraction unit may calculate a false-positive rate occurring when the extracted malicious signature is used.

The analysis unit may verify the malicious traffic file using at least one of a file format of the malicious traffic file, a result of comparison with an existing malicious traffic file, and a result of detection based on an existing detection rule.

The analysis unit may analyze individual packets of the malicious traffic file, and analyzes detailed information about individual flows and an entire flow of the malicious traffic file by grouping the malicious traffic file into the flows.

The detailed information may be analyzed by filtering the analyzed packets and flows based on at least one of a payload character string, a source IP address, a destination IP address, a source port, and a destination port.

The apparatus may further include a display unit for mapping the packets to the flows and displaying a flow corresponding to a packet selected by a user.

The display unit may display information about at least one of a packet, a flow, and a payload corresponding to the extracted malicious signature in association with the malicious signature.

The detection rule generation unit may automatically edit the detection rule using packet information, acquired by applying the detection rule to the packet, or character string information, acquired by applying the detection rule to a character string determined to be the malicious signature.

In accordance with another aspect of the present invention to accomplish the above objects, there is provided a method for automatically generating a detection rule, including analyzing network traffic of an input malicious traffic file, extracting a malicious signature from the malicious traffic file, and generating a detection rule using both the extracted malicious signature and information about packets of the malicious traffic file.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram showing a system for automatically generating detection rules according to an embodiment of the present invention;
FIG. 2 is a block diagram showing the configuration of an apparatus for automatically generating a detection rule according to an embodiment of the present invention;
FIG. 3 is a flowchart showing a method for automatically generating network traffic detection rules, performed by the automatic detection rule generation apparatus according to an embodiment of the present invention;
FIG. 4 is a flowchart showing a method for verifying a malicious traffic file at step S310 of FIG. 3;
FIG. 5 is a flowchart showing a method for extracting a malicious signature at step S340 of FIG. 3; and
FIG. 6 is a diagram showing the configuration of an automatic detection rule generation apparatus according to another embodiment of the present invention.

### DESCRIPTION OF THE PREFERRED EMBODIMENTS

The present invention will be described in detail below with reference to the accompanying drawings. Repeated descriptions and descriptions of known functions and configurations which have been deemed to make the gist of the present invention unnecessarily obscure will be omitted below. The embodiments of the present invention are intended to fully describe the present invention to a person having ordinary knowledge in the art to which the present invention pertains. Accordingly, the shapes, sizes, etc. of components in the drawings may be exaggerated to make the description clearer.

Hereinafter, preferred embodiments of the present invention will be described in detail with reference to the attached drawings.

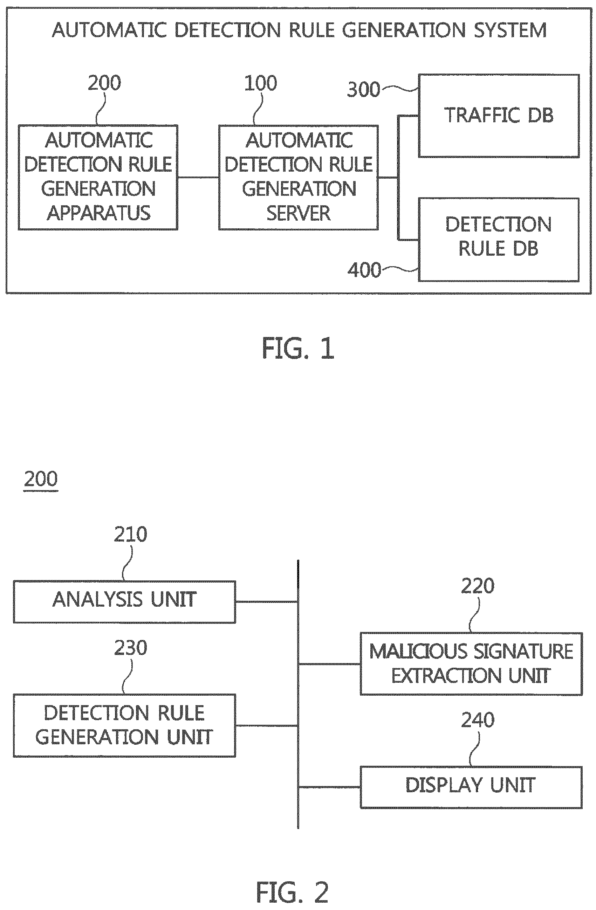

FIG. 1 is a diagram showing a system for automatically generating a detection rule according to an embodiment of the present invention.

As shown in FIG. 1, an apparatus 200 for automatically generating a detection rule may be implemented to be included in the automatic detection rule generation system, and the automatic detection rule generation system may include an automatic detection rule generation server 100, the automatic detection rule generation apparatus 200, a traffic database (DB) 300, and a detection rule DB 400.

First, the automatic detection rule generation server 100 receives a request from the automatic detection rule generation apparatus 200 and executes a task of authenticating the user of the detection rule generation apparatus 200 and then performing operations having high complexity on behalf of the detection rule generation apparatus 200.

Here, when the automatic detection rule generation server 100 is not provided, the automatic detection rule generation apparatus 200 may be implemented so as to be capable of performing all of the operations required to generate and manage detection rules.

Further, the automatic detection rule generation apparatus 200 generates network traffic detection rules from a malicious traffic file.

The automatic detection rule generation apparatus 200 verifies and analyzes the malicious traffic file and clusters the corresponding malicious traffic by applying a latent Dirichlet allocation algorithm to the malicious traffic file. Further, the automatic detection rule generation apparatus 200 extracts a signature from malicious traffic using the degree of distribution of keywords for respective clusters of classified network traffic, and generates detection rules using the extracted malicious signature.

In this case, the automatic detection rule generation apparatus 200 may automatically generate detection rules, or may receive a detection rule generation command from the user and manually generate detection rules.

Next, the traffic DB 300 stores and manages normal traffic and malicious traffic for individual users or groups.

Finally, the detection rule DB 400 stores and manages detection rules for respective users or groups, as well as the detection rules that are currently active.

For the convenience of description, the automatic detection rule generation apparatus 200 has been described as being included in the automatic detection rule generation system, but the present invention is not limited thereto, and it is also possible for the automatic detection rule generation apparatus 200 to independently and automatically generate and manage detection rules.

FIG. 2 is a block diagram showing the configuration of the automatic detection rule generation apparatus according to an embodiment of the present invention.

As shown in FIG. 2, the automatic detection rule generation apparatus 200 includes an analysis unit 210, a malicious signature extraction unit 220, a detection rule generation unit 230, and a display unit 240.

First, the analysis unit 210 analyzes the network traffic of an input malicious traffic file.

Further, the analysis unit 210 may analyze the individual packets of a malicious traffic file, and may analyze detailed information about individual flows and the entire flow of the malicious traffic file by grouping the malicious traffic file into the flows. Here, the analysis unit 210 may filter the analyzed packets and flows based on at least one of a payload character string, a source Internet Protocol (IP) address, a destination IP address, a source port, and a destination port, and then analyze the detailed information.

The analysis unit 210 may verify a malicious traffic file using at least one of the file format of the malicious traffic file, the result of comparison with existing malicious traffic files, and the result of detection based on existing detection rules.

Next, the malicious signature extraction unit 220 extracts a malicious signature from the malicious traffic file.

Here, the malicious signature extraction unit 220 may extract a malicious signature by applying a latent Dirichlet allocation algorithm to the flows of the malicious traffic file. The malicious signature extraction unit 220 extracts character substrings from the payloads of flows corresponding to pre-stored normal traffic and the malicious traffic file, and measures the frequency of detection of each extracted character substring. Also, the malicious signature extraction unit 220 may group words included in the malicious traffic file using the parameter set values of the latent Dirichlet allocation algorithm, analyze the grouping results, and then extract a malicious signature.

Furthermore, the malicious signature extraction unit 220 may calculate a false-positive rate when applying the generated detection rules using the extracted malicious signature.

Also, the detection rule generation unit 230 generates detection rules using both the extracted malicious signature and information about the packets of the malicious traffic file.

The detection rule generation unit 230 automatically or manually edits the detection rules using packet information, which is acquired by applying the detection rules to the packets, or character string information, which is acquired by applying the detection rules to a character string determined to be the malicious signature.

The display unit 240 displays a flow corresponding to a packet selected by the user by mapping the packets and the flows to each other.

Further, the display unit 240 displays information about at least one of the packets, flows, and payloads corresponding to the extracted malicious signature so that the information corresponds to the malicious signature.

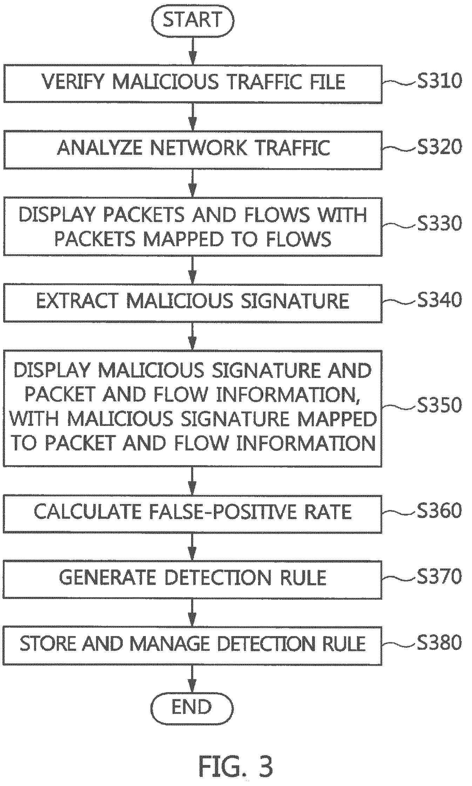

Hereinafter, a method for automatically generating detection rules using the automatic detection rule generation apparatus according to an embodiment of the present invention will be described in greater detail with reference to FIGS. 3 to 5.

FIG. 3 is a flowchart showing an automatic detection rule generation method performed by the automatic detection rule generation apparatus according to an embodiment of the present invention.

First, the automatic detection rule generation apparatus 200 verifies an input malicious traffic file at step S310.

Here, the malicious traffic file may be intended for all traffic that is transmitted and received over a network in order for a malicious program, such as a computer virus, spyware, or Trojan horse, to conduct malicious activity.

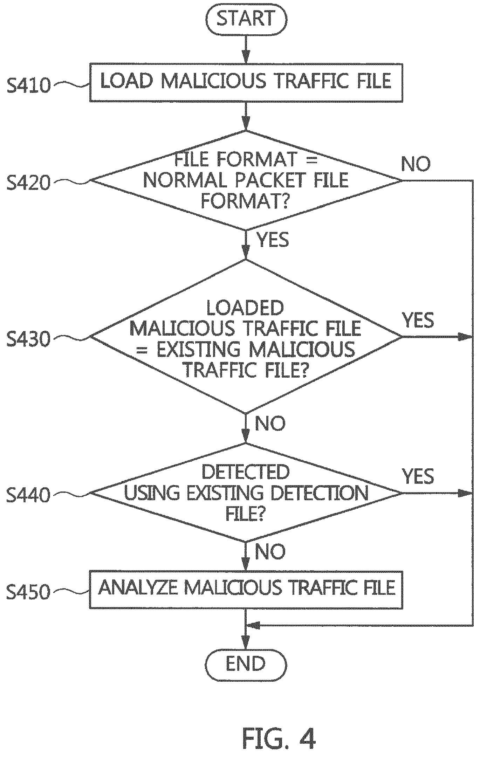

FIG. 4 is a flowchart showing the method of verifying a malicious traffic file at step S310 of FIG. 3.

As shown in FIG. 4, the automatic detection rule generation apparatus 200 loads a malicious traffic file at step S410.

Further, the automatic detection rule generation apparatus 200 determines whether the file format of the loaded malicious traffic file is a normal packet file format at step S420.

If it is determined that the file format of the loaded malicious traffic file is not a normal packet file format, the automatic detection rule generation apparatus 200 terminates the method without performing subsequent steps. Here, the automatic detection rule generation apparatus 200 may notify the user that the loaded malicious traffic file is not a normal packet file.

In contrast, if it is determined that the loaded malicious traffic file is a normal packet file format, the automatic detection rule generation apparatus 200 determines whether the loaded malicious traffic file is a file identical to an existing malicious traffic file at step S430.

Here, the automatic detection rule generation apparatus 200 may determine whether the loaded malicious traffic file is a file identical to an existing malicious traffic file pre-stored in the traffic DB.

If it is determined that the loaded malicious traffic file has been previously registered in the traffic DB, the automatic detection rule generation apparatus 200 may notify the user that the same traffic file has been registered in the traffic DB without analyzing the loaded malicious traffic file.

In contrast, if it is determined that the loaded malicious traffic file is not an existing malicious traffic file, that is, if no traffic file identical to the loaded malicious traffic file is registered in the traffic DB, the automatic detection rule generation apparatus 200 determines whether the loaded malicious traffic file has been detected using the existing detection rule at step S440.

If it is determined that the loaded malicious traffic file has not been detected using the existing detection rule, the automatic detection rule generation apparatus 200 analyzes the corresponding malicious traffic file at step S450.

In contrast, if the loaded malicious traffic file has been detected using the existing detection rule, the automatic detection rule generation apparatus 200 may not perform a task of analyzing the corresponding malicious traffic file and a task of generating a detection rule, which will be described later.

Further, after verifying the malicious traffic file, the automatic detection rule generation apparatus 200 may manage the corresponding traffic for individual users or groups, and search and filter the corresponding traffic.

Referring back to FIG. 3, the automatic detection rule generation apparatus 200, which has verified the malicious traffic file, analyzes the network traffic at step S320.

The automatic detection rule generation apparatus 200 may analyze the individual packets of the malicious traffic, and may assemble the individual flows of the malicious traffic and analyze detailed information about the individual flows and the entire flow thereof. Further, the automatic detection rule generation apparatus 200 may search for and filter the analyzed packets and flows by searching for and filtering at least one of a payload character string, a source IP address, a destination IP address, a source port, and a destination port, based on a specific character string or a specific IP, and may provide the results of searching or filtering to the user.

Here, information about the payload is provided in Hexadecimal (Hex), American Standard Code for Information Interchange (ASCII), Unicode Transformation Format (UTF)-8, or Extended Unix Code (EUC)-KR format. When the user selects a certain portion of the payload, the automatic detection rule generation apparatus 200 may provide information about the start position and length of the selected portion of the payload.

Next, the automatic detection rule generation apparatus 200 displays the packets and flows with the packets mapped to the flows at step S330.

The automatic detection rule generation apparatus 200 maps each packet to a flow corresponding to the packet. Further, when the user selects the analyzed packet, information about the flow corresponding to the selected packet is displayed in association with each other. In particular, the automatic detection rule generation apparatus 200 may provide the information about the flow corresponding to the selected packet to the user, with the flow corresponding to the packet being shaded.

Thereafter, the automatic detection rule generation apparatus 200 extracts a malicious signature at step S340.

The automatic detection rule generation apparatus 200 may extract a malicious signature by applying a latent Dirichlet allocation algorithm to the malicious traffic file. Here, the latent Dirichlet allocation algorithm means a probability model pertaining to which themes are present in a given document, that is, the malicious traffic file.

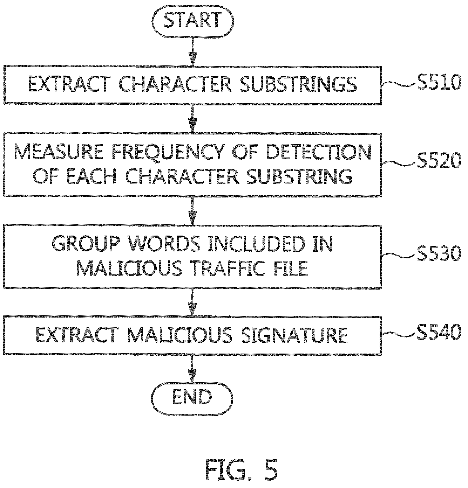

FIG. 5 is a flowchart showing a method for extracting a malicious signature at step S340 of FIG. 3.

As shown in FIG. 5, the automatic detection rule generation apparatus 200 extracts character substrings from the payloads of the selected flows of normal traffic, pre-stored in the traffic DB, and of the malicious traffic file at step S310.

Further, the automatic detection rule generation apparatus 200 measures the frequency of detection of each character substring at step S520.

The automatic detection rule generation apparatus 200 groups the extracted character substrings in correspondence with the parameter set values of the latent Dirichlet allocation algorithm at step S530.

Finally, the automatic detection rule generation apparatus 200 extracts a malicious signature from the malicious traffic file at step S540.

In this way, the automatic detection rule generation apparatus 200 performs clustering by applying the latent Dirichlet allocation algorithm to the malicious traffic file at steps S510 to S540, and extracts a malicious signature using information about the distribution of keywords for respective clusters of classified traffic. The extracted malicious signature is used to generate detection rules at a subsequent step, which will be described later.

Referring back to FIG. 3, the automatic detection rule generation apparatus 200 displays the extracted malicious signature and information about the packets and flows, with the malicious signature mapped to the packet and flow information at step S350.

The automatic detection rule generation apparatus 200 maps the extracted malicious signature to information about the packets and the flows corresponding to the malicious signature. Further, when the user selects an extracted malicious signature, at least one of packets, flows, and payloads corresponding to the selected malicious signature are displayed in association with the malicious signature. In particular, the automatic detection rule generation apparatus 200 may change and display the shading of the packets, flows, and payloads corresponding to the selected malicious signature.

Next, the automatic detection rule generation apparatus 200 calculates a false-positive rate when the extracted malicious signature is used at step S360.

Further, the automatic detection rule generation apparatus 200 generates a detection rule at step S370.

The automatic detection rule generation apparatus 200 may automatically or manually generate a detection rule using the analyzed packet information and the malicious signature of the malicious traffic file, or may edit a previously generated detection rule.

Here, the automatic detection rule generation apparatus 200 may automatically generate and edit the detection rule using an automatic editing module or may manually generate and edit the detection rule using a manual editing module.

The automatic detection rule generation apparatus 200 selects a packet that has been determined to perform malicious activity and automatically analyzes information about the corresponding packet when the detection rule is applied to the selected packet. Here, information about the analyzed packet may include at least one of a source IP address, a destination IP address, a protocol, a source port, and a destination port.

Further, the automatic detection rule generation apparatus 200 reflects the analyzed packet information in the automatic editing module. Further, when the character string determined to be a malicious signature is selected and the detection rule is applied to the character string, the automatic detection rule generation apparatus 200 automatically reflects information, such as the character string corresponding to the signature, the start position of the signature character string, and the length of the signature character string, in the automatic editing module.

Finally, the automatic detection rule generation apparatus 200 stores and manages the generated detection rule at step S380.

The automatic detection rule generation apparatus 200 may store and manage detection rules, which are newly generated, and detection rules, which have been previously generated and stored, for respective users or groups. Here, the generated detection rules may be stored and managed for respective users or groups in the detection rule DB.

For the convenience of description, the automatic detection rule generation apparatus 200 has been described as performing all operations. However, when the complexity of an operation is expected to be equal to or greater than some threshold, the automatic detection rule generation apparatus 200 may request an external automatic detection rule generation server to perform the operation on behalf of the apparatus 200, and may receive the results of processing the operation and then generate a detection rule.

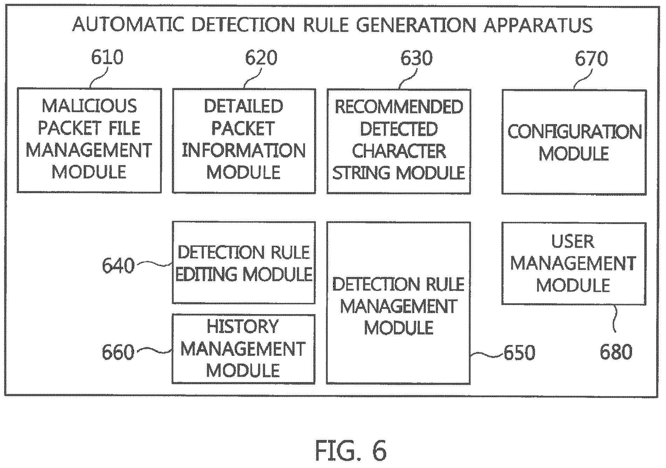

FIG. 6 is a diagram showing the configuration of an automatic detection rule generation apparatus according to another embodiment of the present invention.

As shown in FIG. 6, an automatic detection rule generation apparatus according to another embodiment of the present invention may include a malicious packet file management module 610, a detailed packet information module 620, a recommended detected character string module 630, a detection rule editing module 640, a detection rule management module 650, a history management module 660, a configuration module 670, and a user management module 680.

First, the malicious packet file management module 610 manages the packets and flows of a malicious traffic file, and the detailed packet information module 620 analyzes detailed information about a selected packet or flow.

The recommended detected character string module 630 provides the results of malicious signature extraction by applying a latent Dirichlet allocation algorithm to the selected flow, and the detection rule editing module 640 automatically or manually generates a detection rule or edits the generated detection rule.

The detection rule management module 650 checks and manages detection rules that have been previously generated by the user or detection rules that have been pre-stored in the automatic detection rule generation apparatus or the DB, and the history management module 660 records the details of processing and matters of progress by the automatic detection rule generation apparatus.

The configuration module 670 sets parameters or the like required for the latent Dirichlet allocation algorithm or manages the set parameters or the like. The user management module 680 may add or delete users for generating detection rules, or may change the information and privileges of each user, and manage users and groups corresponding to the users.

In accordance with the present invention, even semi-skilled workers can promptly and easily generate network traffic detection rules, thus enabling prompt responses to network threats, which are rapidly becoming more numerous.

Further, accordance with the present invention, the time and expense required to generate network traffic detection rules may be reduced.

As described above, in the automatic detection rule generation apparatus and method according to the present invention, the configurations and schemes in the above-described embodiments are not limitedly applied, and some or all of the above embodiments can be selectively combined and configured so that various modifications are possible.

## Claims

1. An apparatus for automatically generating a detection rule, comprising:
an analysis unit for analyzing network traffic of an input malicious traffic file;
a malicious signature extraction unit for extracting a malicious signature from the malicious traffic file; and
a detection rule generation unit for generating a detection rule using both the extracted malicious signature and information about packets of the malicious traffic file.

2. The apparatus of claim 1, wherein the malicious signature extraction unit extracts the malicious signature by applying a latent Dirichlet allocation algorithm to flows of the malicious traffic file.

3. The apparatus of claim 2, wherein the malicious signature extraction unit extracts a character substring from payloads of flows corresponding to pre-stored normal traffic and the malicious traffic file, measures frequency of detection of the extracted character substring, groups words included in the malicious traffic file using parameter set values of the latent Dirichlet allocation algorithm, analyzes grouping results, and then extracts the malicious signature.

4. The apparatus of claim 3, wherein the malicious signature extraction unit calculates a false-positive rate occurring when the extracted malicious signature is used.

5. The apparatus of one of claims 1 to 4, wherein the analysis unit verifies the malicious traffic file using at least one of a file format of the malicious traffic file, a result of comparison with an existing malicious traffic file, and a result of detection based on an existing detection rule.

6. The apparatus of one of claims 1 to 5, wherein the analysis unit analyzes individual packets of the malicious traffic file, and analyzes detailed information about individual flows and an entire flow of the malicious traffic file by grouping the malicious traffic file into the flows.

7. The apparatus of claim 6, wherein the detailed information is analyzed by filtering the analyzed packets and flows based on at least one of a payload character string, a source IP address, a destination IP address, a source port, and a destination port.

8. The apparatus of claim 6 or 7, further comprising a display unit for mapping the packets to the flows and displaying a flow corresponding to a packet selected by a user.

9. The apparatus of claim 8, wherein the display unit displays information about at least one of a packet, a flow, and a payload corresponding to the extracted malicious signature in association with the malicious signature.

10. The apparatus of one of claims 1 to 9, wherein the detection rule generation unit automatically edits the detection rule using packet information, acquired by applying the detection rule to the packet, or character string information, acquired by applying the detection rule to a character string determined to be the malicious signature.

11. A method for automatically generating a detection rule, comprising:
analyzing network traffic of an input malicious traffic file;
extracting a malicious signature from the malicious traffic file; and
generating a detection rule using both the extracted malicious signature and information about packets of the malicious traffic file.

12. The method of claim 11, wherein extracting the malicious signature of the malicious traffic file is configured to extract the malicious signature by applying a latent Dirichlet allocation algorithm to flows of the malicious traffic file.

13. The method of claim 12, wherein extracting the malicious signature of the malicious traffic file comprises:
extracting a character substring from payloads of flows corresponding to pre-stored normal traffic and the malicious traffic file;
measuring frequency of detection of the extracted character substring;
grouping words included in the malicious traffic file using parameter set values of the latent Dirichlet allocation algorithm; and
analyzing grouping results, and then extracting the malicious signature.

14. The method of claim 13, further comprising:
calculating a false-positive rate occurring when the extracted malicious signature is used.

15. The method of one of claims 11 to 14, further comprising:
verifying the malicious traffic file using at least one of a file format of the malicious traffic file, a result of comparison with an existing malicious traffic file, and a result of detection based on an existing detection rule.
